Europäisches Patentamt

European Patent Office

Office européen des brevets

(11) Publication number: **0 406 440 A1**

## EUROPEAN PATENT APPLICATION
### published in accordance with Art. 158(3) EPC

(21) Application number: 90901006.8

(22) Date of filing: 28.12.89

(86) International application number: PCT/JP89/01322

(87) International publication number: WO 90/07537 (12.07.90 90/16)

(51) Int. Cl.5: **C08G 65/30, C08G 65/28**

(30) Priority: 06.01.89 JP 266/89

(43) Date of publication of application: 09.01.91 Bulletin 91/02

(84) Designated Contracting States: DE FR GB IT

(71) Applicant: **ASAHI GLASS COMPANY LTD.** 1-2, Marunouchi 2-chome Chiyoda-ku Tokyo 100(JP)

(72) Inventor: **TAKEYASU, Hiromitsu** 4-32-6, Nishiogiminami Suginami-ku Tokyo 167(JP) Inventor: **DOI, Takao** 412-1, Iijimacho Sakae-ku Yokohama-shi Kanagawa-ken 244(JP) Inventor: **OHTSUKA, Yoshihiro** 35-13, Chuou Seya-ku Yokohama-shi Kanagawa-ken 246(JP) Inventor: **KUNII, Nobuaki** 2-3-41, Tachibanadai2Midori-ku Yokohama-shi Kanagawa-ken 227(JP)

(74) Representative: **Wächtershäuser, Günter, Dr.** Tal 29 D-8000 München 2(DE)

(54) **PRODUCTION OF POLYETHER.**

(57) This invention relates to a method for producing a polyether comprising conducting ring-opening addition reaction between a hydroxyl-containing initiator and a number of monoepoxide molecules each having at least three carbon atoms, particularly alkylene oxide molecules, in the presence of a composite metal cyanide complex as a catalyst, treating the formed polyether containing the catalyst with a treatment comprising an alkali metal alcoholate to thereby deactivate the catalyst, and removing the deactivated catalyst and the remaining treatment from the polyether. The invention also relates to a method for producing a polyether comprising deactivating the catalyst with the treatment, reacting the formed polyether with ethylene oxide, and removing the deactivated catalyst and the remaining treatment from the polyether. The use of the treatment comprising an alkali metal alcoholate facilitates the removal of the composite metal cyanide complex from the polyether and the production of oxyethyleneterminated polyether.

Our Ref.: AA-558 (F89-46)

DESCRIPTION

<u>TITLE OF THE INVENTION</u>

PROCESS FOR PRODUCING A POLYETHER

<u>TECHNICAL FIELD</u>

The present invention relates to a process for producing a polyether. Particularly, it relates to a process for producing a polyether polyol.

<u>BACKGROUND ART</u>

Polyethers obtained by subjecting monoepoxides such as alkylene oxides to a ring-opening reaction to initiators, are widely used as starting materials for synthetic resins such as polyurethanes, as surface active agents, as lubricants or for other purposes. The initiators are hydroxyl group-containing compounds of the formula $A(H)_n$ (A: the residue of a hydroxyl group-containing compound excluding the hydrogen atom of the hydroxyl group of the compound, n: an integer of at least 1). Such initiators include, for example, monohydric alcohols, polyhydric alcohols, monohydric phenols, and polyhydric phenols. Further, compounds having hydroxy-alkylamino groups (such as alkanolamines, or amine-alkylene oxide adducts) may also be used as initiators. Furthermore, polyethers obtainable by reacting monoepoxides to the above mentioned initiators, may also be employed as initiators.

Polyethers are the following compounds obtainable by subjecting a number of monoepoxides to a ring-opening addition reaction to the above initiators:

A—[(R-O)$_m$H]$_n$

where (R-O): a unit of the monoepoxide which underwent the ring-opening reaction

m: integer

Heretofore, as a method for producing a polyether, a method has been widely employed in which a monoepoxide is reacted in the presence of an alkali catalyst. As such an alkali catalyst, an alkali metal compound such as pottasium hydroxide or sodium hydroxide, has been used. However, polyethers obtained by using an alkali catalyst, had the following problem. Namely, an unsaturated monool formed by the isomerization of the monoepoxide, particularly propylene oxide, serves as an initiator, and the monoepoxide reacts therewith for ring-opening addition to form an unsaturated polyether monool (which will also be referred to hereinafter as an unsaturated monool).

The proportion of the isomerization increases as the molecular weight of the polyether becomes high. This tendency becomes remarkable when the molecular weight is at least 6,500 (in the case of tri-functional). Therefore, it has been practically impossible to synthesize a polyether having a molecular weight of at least 6,500 in the case where propylene oxide is used as the monoepoxide.

On the other hand, it is known to produce a polyether by using a double metal cyanide complex as a catalyst (USP 3,278,457, USP 3,278,458, USP 3,278,459, USP 3,427,256, USP 3,427,334, and USP 3,427,335). With this catalyst, the formation of the above unsaturated monool is little, and it is also possible to produce a polyether having a very high molecular weight.

However, the above double metal cyanide complex catalyst has the following two problems. Firstly, when a monoepoxide having at least 3 carbon atoms is subjected to a ring-opening reaction to an initiator using the double metal cyanide complex as the catalyst to obtain a polyether, it is difficult to remove the catalyst from the polyether. It has been impossible to remove the catalyst by filtration or to adsorb and separate the catalyst with an adsorbing agent such as active carbon.

Accordingly, in order to remove this catalyst from the polyether obtained by using the metal cyanide complex, it is not sufficient to simply conduct filtration or treatment with an adsorbing agent, and it is necessary to decompose the catalyst with an alkali or acid into ions, and then remove such decomposition products and the residual alkali and residual acid by adsorption or filtration.

Secondly, it has been difficult to react ethylene oxide to a hydroxyl group by using a double metal cyanide complex as a catalyst. If ethylene oxide is continuously

- 4 -

fed to a polyether obtained by using the double metal
cyanide complex as the catalyst and subjecting a
monoepoxide having at least 3 carbon atom to a ring-
opening reaction to an initiator, polyethylene glycol
which is a homopolymer of ethylene oxide will be formed,
and no uniform addition of ethylene oxide to the terminal
hydroxyl groups of the polyether will take place.

A method for removing the catalyst residue by
treating the double metal cyanide complex catalyst with
an alkali to deactivate the catalyst, or a method wherein
ethylene oxide is added after the alkali treatment, and
then the catalyst residue is removed, have been known.
As the method for alkali treatment, a method has been
known wherein an alkali metal or an alkali metal
hydroxide (USP 4,355,188), or an alkali metal hydride
(USP 4,721,818), is used. However, such an alkali metal
simple substance or alkali metal hydride involves a
danger in handling. Further, in the case of the alkali
metal hydroxide, particularly when the polyether becomes
to have a high molecular weight, it takes time for the
dewatering treatment, and such a method is not practical.

## DISCLOSURE OF INVENTION

The present invention has been made to solve the
above problems and provides the following inventions.

A process for producing a polyether, which comprises
treating a polyether obtained by subjecting a
monoepoxide having at least 3 carbon atoms to a ring-opening addition reaction to an initiator having at least one hydroxyl group in the presence of a double metal cyanide complex catalyst, and containing said catalyst, with a treating agent composed of an alkali metal alcoholate to deactivate said catalyst, and then removing the deactivated catalyst component and the treating agent component from the polyether.

A process for producing a polyether, which comprises treating a polyether obtained by subjecting a monoepoxide having at least 3 carbon atoms to a ring-opening addition reaction to an initiator having at least one hydroxyl group in the presence of a double metal cyanide complex catalyst, and containing said catalyst, with a treating agent composed of an alkali metal alcoholate to deactivate said catalyst, then using the polyether as an initiator, reacting ethylene oxide thereto, and thereafter removing the deactivated catalyst component and the treating agent component from the obtained polyether.

The double metal cyanide complex in the present invention is considered to have a structure of the following general formula (1), as shown in the above mentioned prior art references:

$$M_a[M'_x(CN)_y]_b(H_2O)_c(R)_d \qquad (1)$$

wherein M is e.g. Zn(II), Fe(II), Fe(III), Co(II), Ni(II), Aℓ(III), Sr(II), Nm(II), Cr(III), Cu(II), Sn(II), Pb(II), Mo(IV), Mo(VI), W(IV) or W(VI), M' is e.g.

Fe(II), Fe(III), Co(II), Co(III), Cr(II), Cr(III), Mn(II), Mn(III), Ni(II), V(IV) or V(V), R is an organic ligand, a, b, x and y are positive integers variable depending upon the valences and coordination numbers of the metals, and c and d are positive numbers variable depending upon the coordination numbers of the metals.

In the formula (1), M is preferably Zn(II), and M' is preferably Fe(II), Fe(III), Co(II) or Co(III). The organic ligand may be, for example, a ketone, an ether, an aldehyde, an ester, an alcohol or an amide.

The double metal cyanide complex of the formula (1) can be prepared by mixing a metal salt $MX_a$ wherein M and a are as defined above, and X is an anion capable of forming a salt with M, and a polycyano metalate (salt) $Z_e[M'_x(CN)_y]_f$ wherein M', x and y are as defined above, Z is e.g. hydrogen, an alkali metal or an alkaline earth metal, and e and f are positive integers determined by the valences and the coordination numbers of Z and M', in their aqueous solutions or in their solutions in a solvent mixture of water and an organic solvent, contacting an organic ligand R to the resulting double metal cyanide, followed by removal of excess solvent and organic compound R.

In the polycyano metalate (salt) $Z_e[M'_x(CN)_y]_f$, hydrogen or various metals including alkali metals, may be used as Z, but a lithium salt, a sodium salt, a potassium salt, a magnesium salt or a calcium salt, is preferred. Particularly preferred is a usual alkali metal salt such as a sodium salt or a potassium salt.

The polyether is produced usually by reacting a mixture of the monoepoxide and the initiator in the presence of the catalyst. Otherwise, the reaction can be conducted by gradually adding the monoepoxide to the reaction system. The reaction may take place at room temperature. However, if necessary, the reaction system may be heated or cooled. The amount of the catalyst to be used is not particularly limited. However, it is preferably at a level of from 1 to 5,000 ppm, more preferably from 30 to 1,000 ppm, relative to the initiator used. The introduction of the catalyst to the reaction system may be done all at once at the beginning, or may be done gradually by sequential divided intorduction.

By use of such a double metal cyanide catalyst, it is possible to obtain a polyether having a small content of the unsaturated monool, or a polyether having a small content of the unsaturated monool and at the same time a very high molecular weight.

As the alkali metal alcoholate in the present invention, an alcoholate of a monohydric or polyhydric alcohol is suitable. As the alcohol, an alcohol having a low boiling point is preferred, because it will thereby be very easy to remove a by-product alcohol after reacting a polyether with the alcoholate. Accordingly,

- 8 -

as the alcohol, a lower monool, particularly methanol or ethanol, is preferred. As the alkali metal, sodium or potassium is preferred. A methylate or ethylate of such a metal is easy in its handling and the treatment therewith and easy for industrial application as a treating agent. The sodium or potassium alcoholate used here, may be employed in a diluted form as an alcohol solution, or in the form of a powder of single substance.

As a treating method for the polyether containing the double metal cyanide complex, a method is preferred in which the alkali metal alcoholate is added, and the mixture is heated preferably at a temperature of from 80 to 180°C, especially from 100 to 150°C, and, if necessary, subjected to reduced pressure treatment, followed by purification. In the case of reacting ethylene oxide, a method is preferred in which the alkali metal alcoholate is added, the mixture is heated in a similar manner, followed by reduced pressure treatment to remove a by-product alcohol, and thereafter ethylene oxide is reacted, followed by purification. In the purification process, treatment is conducted by means of e.g. a neutralizing agent, an adsorbing agent or an ion exchanger, and then unnecessary substances will be removed from the polyether by e.g. filtration. By this purification process, the catalyst residue and the alkali residue can all be removed from the polyether. As the neutralizing agent, an acid or a base may be employed.

- 9 -

As the adsorbing agent, synthetic magnesium silicate, alumina silicate, or a metal oxide such as silica or zeolite, may be employed. As the ion exchanger, an ion exchange resin such as an anion exchange resin or a cation exchange resin may, for example, be mentioned.

As the polyether obtained by the process of the present invention, polyoxyalkylenepolyol is preferred. The polyoxyalkylenepolyol is the one obtained by reacting a monoepoxide such as an alkylene oxide to an initiator having at least two hydroxyl groups, for subsequent ring-opening addition reaction. As the initiator, a polyhydroxy compound having from 2 to 8 hydroxyl groups, is particularly preferred. As such a polyhydroxy compound, dihydric alcohol such as ethylene glycol or propylene glycol, a trihydric alcohol such as glycerol, trimethylolpropane or hexantriol, a tetrahydric or higher valence alcohol such as pentaerythritol, diglycerol, dextrose, sorbitol or sucrose, and polyethers obtained by reacting a monoepoxide such as an alkylene oxide to such an alcohol and having a molecular weight lower than the desired product, may be mentioned. Further, there may be mentioned a compound having a phenolic hydroxyl group or a methylol group, such as bisphenol, resol, novolak, a compound having a hydroxyl group and other active hydrogen groups, such as ethanolamine or diethanolamine, and a polyether obtainable by reacting a monoepoxide such as an alkylene oxide to such a compound and having a

- 10 -

molecular weight lower than the desired product. Further, there may be mentioned a polyether obtained by reacting a monoepoxide such as an alkylene oxide to a monoamine or polyamine having at least two hydrogen atoms bonded to a nitrogen atom, and having a molecular weight lower than the desired product. Other than the above, phosphoric acid or its derivatives, or other polyhydroxy compounds, may also be employed. Such polyhydroxy compounds may be used in combination as a mixture of two or more differt types.

The present invention can be applied also to a method for producing a polyether monool, which comprises subjecting a monoepoxide to a ring-opening reaction to a monovalent initiator. Such a monovalent initiator includes, for example, methanol, ethanol, butanol, hexanol, other monools, phenol, a phenol derivative such as an alkyl-substituted phenol, and a polyether obtainable by reacting a monoepoxide such as an alkylene oxide thereto and having a molecular weight lower than the desired product. Further, a polyether having a molecular weight lower than the desired product may be mentioned which is obtainable by reacting a monoepoxide such as an alkylene oxide to a monoamine or polyamine having one hydrogen atom bonded to a nitrogen atom.

The monoepoxide in the present invention is a monoepoxide having at least 3 carbon atoms. An alkylene oxide having at least 3 carbon atoms, is particularly

- 11 -

preferred. More preferably, it is an alkylene oxide having 3 or 4 carbon atoms such as propylene oxide, 1, 2-butylene oxide, 2,3-butylene oxide or epichlorohydrin. Most preferably, it is propylene oxide. Such alkylene oxides may be used alone or in combination as a mixture of two or more different types. Otherwise, they may be used in combination with other monoepoxides such as styrene oxide, glycidyl ether, and glycidyl ester. When two or more alkylene oxides are used, or an alkylene oxide and other monoepoxide are used in combination, they may be mixed and added, or sequentially added, to form a random polymer chain or blocked polymer chain.

However, if it is attempted to directly react ethylene oxide to the initiator or to the polyether using the double metal cyanide as the catalyst, polyethylene glycol which is a homopolyer of ethylene oxide, will form. Therefore, it is impossible to copolymerize ethylene oxide with other monoepoxide using this catalyst, or to react ethylene oxide to a polyether obtained by using the double metal cyanide as the catalyst to obtain a polyether having a higher proportion of primary hydroxyl groups. However, it is possible to employ, as the initiator, a hydroxy compound having oxyethylene groups, such as a polyoxyalkylenepolyol having oxyethylene groups.

According to the process of the present invention, by the treatment with sodium alcoholate or potassium

- 12 -

alcoholate, the hydroxyl groups of the polyether can be converted to alcoholate, and then ethylene oxide is reacted thereto to introduce oxyethylene groups at the molecular terminals, followed by separating the catalyst component, whereby it is possible to obtain a polyether having a high proportion of primary hydroxyl groups.

The molecular weight of the polyether thereby obtained, is not particularly limited. However, from the viewpoint of its application, the product is preferably liquid at room temperature. The amount of the monoepoxide reacted to one mol of the initiator is preferably at least about 10 mols, more preferably at least about 50 mols. Further preferably, the polyether is obtained by reacting at least about 10 molecules, particularly at least about 30 molecules, on average, per hydroxyl group of the initiator. Further, if represented by the hydroxyl value, its hydroxyl value is preferably at most 200, particularly at most 100. For example, as the starting material for polyurethane, a liquid polyetherpolyol having a hydroxyl value of from about 5 to 200, particularly from 5 to 60, is preferred. For other applications, for example, as the starting material for an oil such as hydraulic oil, a polyetherpoly(or mono)ol within the above range is preferred.

The polyetherpolyol obtained by the present invention is most useful as a polyol as a starting material for polyurethane, to be used alone or in combination with

- 13 -

other polyols. Further, the polyetherpoly(or mono)ol obtained by the present invention, is useful also as a starting material or as an additive for synthetic resins other than polyurethane. Further, it can be used as an oil such as lubricating oil, insulating oil, hydraulic oil, etc., or as a starting material thereof. Further, the polyether obtained by the present invention may be converted to other compounds such as alkylethers or acyl compounds, which will be used for various applications.

Now, the present invention will be described in detail with reference to Examples and Comparative Examples. However, the present invention is by no means restricted to such Examples.

EXAMPLES

The following polyoxypropylenepolyols were treated with sodium alcoholate or potassium alcoholate, followed by the reaction of ethylene oxide thereto and removal of the residues.

The following polyoxypropylenepolyols are polyoxypropylenetriols obtained by adding a zinc-hexacyano cobaltate complex catalyst to an initiator of polyoxypropyltriol having a molecular weight of about 500, supplying propylene oxide, and reaching the mixture at 120°C until a prescribed molecular weight was reached. Such polyoxypropylenetriols thus prepared, contained metal components in the following amounts as catalysts.

Polyol A: polyoxypropylenetriol having a molecular weight

- 14 -

of 5,000 and containing a zinc-hexacyano cobaltate complex (Zn: 35 ppm, Co: 18 ppm)

Polyol B: polyoxypropylenetriol having a molecular weight of 7,000 and containing a zinc-hexacyano cobaltate complex (Zn 60 ppm, Co: 31 ppm)

Polyol C: polyoxypropylenetriol having a molecular weight of 9,000 and containing a zinc-hexacyano cobaltate complex (Zn 80 ppm, Co: 39 ppm)

Polyol D: polyoxypropylenetriol having a molecular weight of 15,000 and containing a zinc-hexacyano cobaltate complex (Zn: 100 ppm, Co: 49 ppm)

Example 1

To 1,000 g of polyol A, 20 g of sodium methylate (a 30% methanol solution) was added, and a methanol removal reaction was conducted at 70°C under 10 Torr for one hour. Then, 300 g of ethylene oxide was introduced thereto, and the reaction was conducted at 100°C for 3 hours.

After the reaction, an adsorbing agent (synthetic magnesium silicate) was added to the product, so that the catalyst residue and the sodium content were adsorbed by the adsorbing agent, followed by filtration to obtain a transparent polyol. The characteristic values of the polyol thus obtained, were as shown below.

Comparative Example 1

The reaction of ethylene oxide was conducted in the same manner as in Example 1 directly to 1,000 g of polyol A without conducting the sodium methylate treatment. White precipitates were observed in the polyol thus obtained.

The characteristics of the polyols obtained in Example 1 and Comparative Example 1 are shown in Table 1.

Table 1

|  | Example 1 | Comparative Example 1 |
|---|---|---|
| Primary hydroxyl (%) | 89 | 15 |
| Zn (ppm) | 0.8 | 35 |
| Co (ppm) | 0.5 | 18 |
| Na (ppm) | 5.0 | 0 |
| K (ppm) | 0 | 0 |
| Appearance | Transparent | White turbidity |

Example 2

To 1,000 g of polyol B, 21 g of potassium methylate (a 30% methanol solution) was added, and a methanol removal reaction was conducted at 70°C under 10 Torr for one hour. Then, to the reaction product, twice by weight of n-hexane and once by weight of water were added, and the mixture was treated at 70°C for 3 hours. Then, the supernatant comprising n-hexane and the polyol was separated. From the supernatant, n-hexane was separated by distillation to recover a polyol.

- 16 -

Comparative Example 2

To 1,000 g of polyol B, 12 g of potassium hydroxide (a 48% aqueous solution) was added, and the treatment was conducted in the same manner as in Example 2. By the water-removal operation, the water content could not be lowered to a level of not higher than 0.4%.

Further, slight turbidity was observed in the polyol thereby obtained.

The characteristics of the polyols obtained in Example 2 and Comparative Example 2 are shown in Table 2.

Table 2

|  | Example 2 | Comparative Example 2 |
|---|---|---|
| Zn (ppm) | 1.0 | 45.0 |
| Co (ppm) | 0.7 | 17.0 |
| K (ppm) | 4.0 | 120.0 |
| Appearance | Transparent | White turbidity |

Example 3

To 1,000 g of polyol C, 7 g of potassium methylate (a 30% methanol solution) was added, and a methanol removal reaction was conducted at 90°C under 10 Torr for one hour. Then, 100 g of ethylene oxide was introduced thereto, and the reaction was conducted at 100°C for 3 hours.

- 17 -

After the reaction, 500 g of THF (tetrahydrofuran) and 100 g of $H_2O$ were added to the product, and the mixture was passed through a cation exchange resin and an anion exchange resin. Finally, THF and $H_2O$ were removed under vacuum and heating to obtain a transparent product.

Comparative Example 3

Sodium metal (dispersed in a mineral oil) was added to polyether C, and the reaction and treatment were conducted in the same manner as above.

Yellowing and turbidity were observed in the polyol thereby obtained.

The characteristics of the polyols obtained in Example 3 and Comparative Example 3 are shown in Table 3.

Table 3

|  | Example 1 | Comparative Example 3 |
|---|---|---|
| Primary hydroxyl (%) | 87 % | 86% |
| Zn (ppm) | 0.9 | 1.0 |
| Co (ppm) | 0.6 | 0.7 |
| Na (ppm) | 0 | 5.0 |
| K (ppm) | 3.0 | 0 |
| Appearance | Transparent | Yellowing and turbidity |

Example 4

To 1,500 g of polyol D, 15 g of sodium methylate (a 30% methanol solution) was added, and the methanol removal reaction was conducted at 100°C under 10 Torr for one hour. Then, 100 g of ethylene oxide was introduced thereto, and the reaction was conducted at 100°C for 3 hours.

After reaction, an adsorbing agent (synthetic magnesium silicate) was added to the product, whereby the catalyst residue and the sodium content were adsorped by the adsorbing agent, followed by filtration to obtain a transparent polyol. The characteristic values of the polyol thus obtained were as shown below.

Comparative Example 4

To 1,500 g of polyol D, 9.5 g of potassium hydroxide (a 48% aqueous solution) was added, and water removal was conducted at 120°C under 10 Torr for 3 hours. By the water removal operation, the water content could not be lowered to a level of not higher than 0.2%.

To this polyol, ethylene oxide was reacted in the same manner as in Example 4, followed by purification. The polyol thereby obtained had white turbidity.

The characteristics of the polyols obtained in Example 4 and Comparative Example 4 are shown in Table 4.

- 19 -

Table 4

|  | Example 4 | Comparative Example 4 |
|---|---|---|
| Primary hydroxyl (%) | 86% | 65.2% |
| Zn (ppm) | 1.0 | 10.0 |
| Co (ppm) | 0.6 | 4.5 |
| Na (ppm) | 1.0 | 0 |
| K (ppm) | 0 | 11.0 |
| Appearance | Transparent | White turbidity |

- 20 -

## CLAIMS

1. A process for producing a polyether, which comprises treating a polyether obtained by subjecting a monoepoxide having at least 3 carbon atoms to a ring-opening addition reaction to an initiator having at least one hydroxyl group in the presence of a double metal cyanide complex catalyst, and containing said catalyst, with a treating agent composed of an alkali metal alcoholate to deactivate said catalyst, and then removing the deactivated catalyst component and the treating agent component from the polyether.

2. The process according to Claim 1, wherein to the polyether containing the catalyst, the treating agent composed of an alkali metal alcoholate is added and heated, and then the catalyst component and the treating agent component are removed from the polyether.

3. A process for producing a polyether, which comprises treating a polyether obtained by subjecting a monoepoxide having at least 3 carbon atoms to a ring-opening addition reaction to an initiator having at least one hydroxyl group in the presence of a double metal cyanide complex catalyst, and containing said catalyst, with a treating agent composed of an alkali metal alcoholate to deactivate said catalyst, then using the polyether as an initiator, reacting ethylene oxide thereto, and thereafter removing the deactivated catalyst component and the treating agent component from the obtained polyether.

4. The process according to Claim 3, wherein the alkali metal alcoholate is at least one alkali metal alcoholate selected from sodium alcoholate and potassium alcoholate.

5. The process according to Claim 3, wherein the alkali metal alcoholate is an alcoholate of an alcohol having at most 4 carbon atoms.

6. The process according to Claim 3, wherein the alkali metal alcoholate is an alcoholate of an alkali metal selected from sodium and potassium, with an alcohol selected from methanol and ethanol.

7. The process according to Claim 3, wherein the monoepoxide having at least 3 carbon atoms is an alkylene oxide having 3 or 4 carbon atoms.

8. The process according to Claim 3, wherein the monoepoxide having at least 3 carbon atoms is propylene oxide.

9. The process according to Claim 3, wherein to the polyether containing the catalyst, the treating agent composed of an alkali metal alcoholate is added and heated, then, an alcohol produced as byproduct is removed, and thereafter ethylene oxide is reacted.

10. The process according to Claim 9, wherein the heating temperature is from 100 to 150°C.

11. The process according to Claim 9, wherein the removal of the alcohol is conducted by reducing the pressure.

12. The process according to Claim 3, wherein the

- 22 -

polyether is a polyether obtained by reacting at least 50 mols of the monoepoxide having at least 3 carbon atoms to 1 mol of the initiator.

# INTERNATIONAL SEARCH REPORT

International Application No  PCT/JP89/01322

## I. CLASSIFICATION OF SUBJECT MATTER (if several classification symbols apply, indicate all) ⁶

According to International Patent Classification (IPC) or to both National Classification and IPC

Int. Cl⁵   C08G65/30, 65/28

## II. FIELDS SEARCHED

### Minimum Documentation Searched ⁷

| Classification System | Classification Symbols |
|---|---|
| IPC | C08G65/16 − 65/20, 65/28 − 32 |

### Documentation Searched other than Minimum Documentation to the Extent that such Documents are Included in the Fields Searched ⁸

Jitsuyo Shinan Koho           1926 − 1990
Kokai Jitsuyo Shinan Koho      1971 − 1990

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, B2, 59-15336 (The General Tire & Rubber Co.), 9 April 1984 (09. 04. 84), Column 1, line 27 to column 2, line 3, column 5, lines 14 to 22 & GB, A, 2085457 & FR, A, 2492390 & DE, A, 3132258 | 1 − 12 |
| Y | US, A, 4721818 (Atlantic Richfield Company), 26 January 1988 (26. 01. 88) & EP, A, 283298 & JP, A, 1-229035 | 1 − 12 |
| A | Suehiro Tadashi [ Gendai no Uki Kagaku Jikken ] The first edition, 5 December 1971 (05. 12. 71), Gihodo Kabushiki Kaisha, p.269, lines 2 to 9, p.277, lines 20 to 24, p.281, line 19 to p.282 | 1 − 12 |
| A | L. F. FIESER "Reagent for Dvganic Synthesis" (1967) John Wiley & Sons, Inc. p.1091 | 1 − 12 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 20, 1990 (20. 03. 90) | April 2, 1990 (02. 04. 90) |
| International Searching Authority | Signature of Authorized Officer |
| Japanese Patent Office | |

FURTHER INFORMATION CONTINUED FROM THE SECOND SHEET

| | (Continuation of Box No. III) | |
|---|---|---|
| A | L. F. FIESER"Reagent for Organic Synthesis" (1967) John Wiley & Sons, Inc. p.1091 | 1-12 |

**V.☐ OBSERVATIONS WHERE CERTAIN CLAIMS WERE FOUND UNSEARCHABLE ¹**

This international search report has not been established in respect of certain claims under Article 17(2) (a) for the following reasons:

1.☐ Claim numbers ........... because they relate to subject matter not required to be searched by this Authority, namely:

2.☐ Claim numbers .........., because they relate to parts of the international application that do not comply with the prescribed requirements to such an extent that no meaningful international search can be carried out, specifically:

3.☐ Claim numbers........... because they are dependent claims and are not drafted in accordance with the second and third sentences of PCT Rule 6.4(a).

**VI.☐ OBSERVATIONS WHERE UNITY OF INVENTION IS LACKING ²**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.